# EUROPEAN PATENT SPECIFICATION

(11) **EP 2 573 045 B1**
(45) Date of publication and mention of the grant of the patent: **29.04.2015**
(21) Application number: 12158145.8
(22) Date of filing: 05.03.2012
(51) Int. Cl.: C01B 3/38, B01J 8/02, H01M 8/06, B01J 8/06

(54) **Burner reformer for fuel cell power generating system**
Brennerreformierer eines Kraftstoffzellenenergieerzeugungssystems
Reformeur de brûleur pour système de génération électrique de pile à combustible

(30) Priority: 22.09.2011 TW 100134070
(43) Date of publication of application: 27.03.2013
(73) Proprietor: Atomic Energy Council - Institute of Nuclear Energy Research, Taoyuan County 325 (TW)
(72) Inventor: Hong, Wen-Tang, 325 Taoyuan County (TW); Huang, Cheng-Nan, 325 Taoyuan County (TW); Tsai, Yu-Ching, 325 Taoyuan County (TW); Tan, Hsueh-I, 325 Taoyuan County (TW); Lo, Shih-Kun, 325 Taoyuan County (TW); Lin, Ming-Dar, 325 Taoyuan County (TW); Lai, Chen-Po, 325 Taoyuan County (TW); Cheng, Yung-Neng, 325 Taoyuan County (TW); Lee, Ruey-Yi, 325 Taoyuan County (TW)
(74) Representative: Lang, Christian

(56) References cited:
- EP-A1- 1 717 197
- EP-A2- 2 314 917
- US-A1- 2003 054 213
- US-A1- 2007 000 175
- US-A1- 2009 317 671
- US-A1- 2010 086 477

## Description

### Technical Field of the Invention

The present invention relates to a reformer; more particularly, relates to providing a burner reformer used in a power generating system using fuel cell.

### Description of the Related Arts

Oil consuming brings in problems of environmental contamination and resource wasting, which also leads to green-house effect. Hence, new energy technologies are developed. Wind power is limited to local environment, tide power is the same, geothermal energy has no difference, and solar cell has problem in low conversion rate. Yet, fuel cell has low pollution rate, small noise, high efficiency and wide application. Hence, it has become one of the key energy technologies to be developed. Fuel cell does not burn a traditional fuel to generate heat, but convert chemical energy into electric energy to generate heat, which usually consumes hydrogen as a fuel.

Since hydrogen usually does not exist alone in nature, hydrogen generating system becomes one of the critical issues. Methane, methanol, ethanol, gas, liquefied petroleum gas, oil, etc. can be sources for generating hydrogen through reformation. A reformer can be used to reform a fuel selected from the above sources into a hydrogen-rich gas in a high-temperature environment. The reformer needs different type of heat according to its own type. For improving system efficiency, residual fuel obtained after electrochemical reaction in a burner is usually recycled for combustion to improve heat in a high-temperature tail-gas for processing reformation in the reformer.

However, the reformer is usually operated above 800 Celsius degrees (°C) and the burner is set aside from the reformer, so that the burner has to connect to the reformer through tubes or pipes. But, the high temperature is hard to be kept. For solving the problem, the burner is sometimes operated under 1000° C, which raises operational risk.

In the US 7,156,886 B2 patent, a burner is integrated with a reformer. But, it only stacks the burner and the reformer. The burner is position under the reformer to provide tail gas after combustion to the reformer for reformation. Yet, heat loss is still great. In US 2010/0136378 A1 patent, the burner avoids flashing back of hydrogen. Yet, when the fuel is lean, flame may die and the whole system may be thus stopped. Hence, the prior arts do not fulfill all users' requests on actual use. The US 2007/000175 A1 patent application discloses a fuel reformer in a cylindrical geometry comprising a combustion section, a boiler section and a reforming section, wherein said reforming section has at least one catalyst filled tubes, said boiler section is provided with at least one flow channels and said combustion section is provided with at least one burner.

### Summary of the Invention

The main purpose of the present invention is to provide a burner reformer having a simple structure to be easily operated with improved efficiency, reduced contamination and lowered cost.

The second purpose of the present invention is to not only avoid flashing back of hydrogen but also help system run stably to keep from flaming out even when fuel is lean.

To achieve the above purposes, the present invention is a burner reformer for a fuel cell power generating system, comprising a gas inlet, a residual fuel inlet, an oxidant inlet, a spraying device, a porous media burner, a fuel inlet, a pre-heater, a distributing ring, a spreading plate, a plurality of fuel reformers, an igniter, a first tail-gas outlet, a plurality of tail-gas deflectors, a guiding channel, a guiding blade, a second tail-gas outlet, a plurality of outlets of burner reformer and an reformate gas outlet, where a hydrogen-rich gas generated from the burner reformer is directly provided for electrochemical reaction in solid oxide fuel cell (SOFC) or, for electrochemical reaction with proton exchange membrane (PEM) to generate electric energy coordinated with removing carbon monoxide and cooling down temperature. Accordingly, a novel burner reformer for a fuel cell power generating system is obtained.

### Brief Descriptions of the Drawings

The present invention will be better understood from the following detailed description of the preferred embodiment according to the present invention, taken in conjunction with the accompanying drawings, in which
- FIG.1: is the sectional view showing the preferred embodiment according to the present invention;
- FIG.2: is the view showing the spraying device;
- FIG.3: is the view showing the distributing ring;
- FIG.4: is the view showing the state of use of the present invention.

### Description of the Preferred Embodiment

The following description of the preferred embodiment is provided to understand the features and the structures of the present invention.

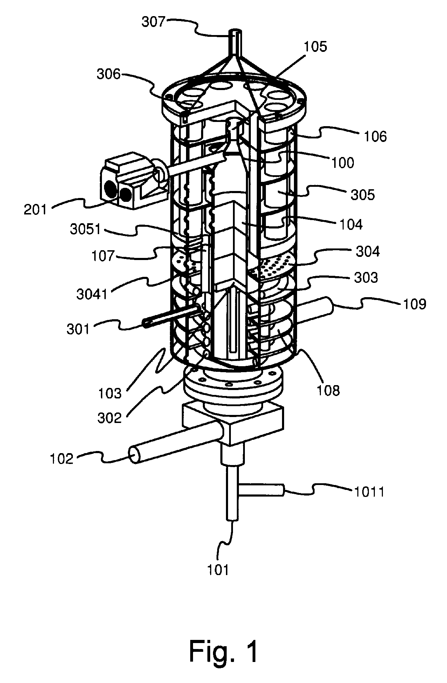

Please refer to FIG.1 to FIG.4, which are a sectional view showing a preferred embodiment according to the present invention; a view showing a spraying device; a view showing a distributing ring; and a view showing a state of use of the present invention. As shown in the figures, the present invention is a burner reformer for a fuel cell power generating system, comprising a gas inlet 101, a residual fuel inlet 1011, an oxidant inlet 102, a spraying device 103, a porous media burner 104, a first tail-gas outlet 105, a plurality of tail-gas deflectors 106, a guiding channel 107, a guiding blade 108, a second tail-gas outlet 109, an igniter 201 , a fuel inlet 301 , a pre-heater 302, a distributing ring 303, a spreading plate 304, a plurality of fuel reformer 305, a plurality of outlets of burner reformer 306 and a reformate gas outlet 307.

The gas inlet 101 guides a gas to enter.

The residual fuel inlet 1011 is connected with the gas inlet 101 to guide an unreacted residual hydrogen-rich gas to enter.

The oxidant inlet 102 guides an oxidant to enter for providing an oxygen-contained gas or fuel. Therein, the oxidant is a high-temperature oxygen-contained gas at cathode outlet of a cell stack; a general normal- or high-temperature gas; or a cooled-down gas from the cathode outlet of the cell stack.

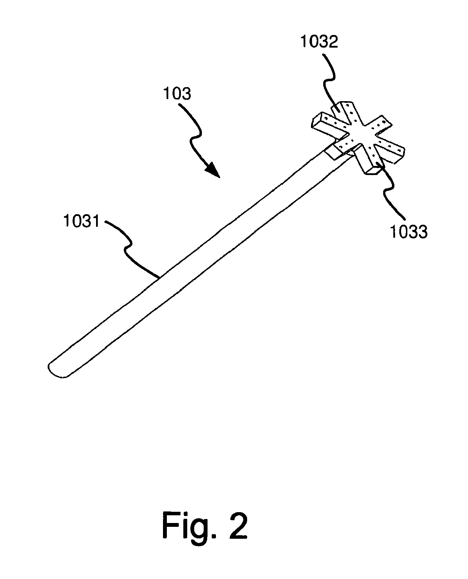

The spraying device 103, as shown in FIG.2, is positioned in a combustion chamber 100 and is connected with the gas inlet 101 and the residual fuel inlet 1011. The spraying device 103 comprises a fuel tube 1031; a plurality of branch tube 1032; and a spraying hole 1033 located on each branch tube 1032. The spraying device 103 guides the gas or fuel to enter from the fuel tube 1031 to be directly sprayed from the spraying hole 1033. The gas or fuel is sprayed in the porous media burner 104 to process a burning reaction with gas entered from the oxidant inlet 102.

The porous media burner 104 is located on the spraying device 103 in the combustion chamber 100 to burn the fuel entered from the spraying device 103, which is mixed with the oxidant entered from the oxidant inlet 102.

The first tail-gas outlet 105 is connected at an upper terminal of the combustion chamber 100 to output a high-temperature tail-gas obtained after combustion.

The tail-gas deflector 106 surrounds the first tail-gas outlet 105 and the combustion chamber 100 at outside to guide the high-temperature tail-gas entered from the first tail-gas outlet 105 for providing heat to process reformation with a catalyst in the fuel reformer 305.

The guiding channel 107 penetrates through a loading plate 3051 to pass the high-temperature tail-gas from the loading plate 3051 to the spreading plate 304 without contacting the distributing ring 303.

The guiding blade 108 surrounds the combustion chamber 100 and is located on a lower surface of the distributing ring 303. The guiding blade 108 is an area for processing pre-heating to the high-temperature tail-gas entered from the guiding channel 107.

The second tail-gas outlet 109 outputs the high-temperature tail-gas to be collected.

The igniter 201 is located on the porous media burner 104 to obtain energy for activating the burner reformer 305 to process burning in the porous media burner 104.

The fuel inlet 301 guides a to-be-reformed fuel to enter, where the to-be-reformed fuel comprises gas, air and water and is changeable according to fuel formula and reforming method.

The pre-heater 302 surrounds the combustion chamber 100 at outside to absorb heat of a high-temperature tail-gas to pre-heat fuel.

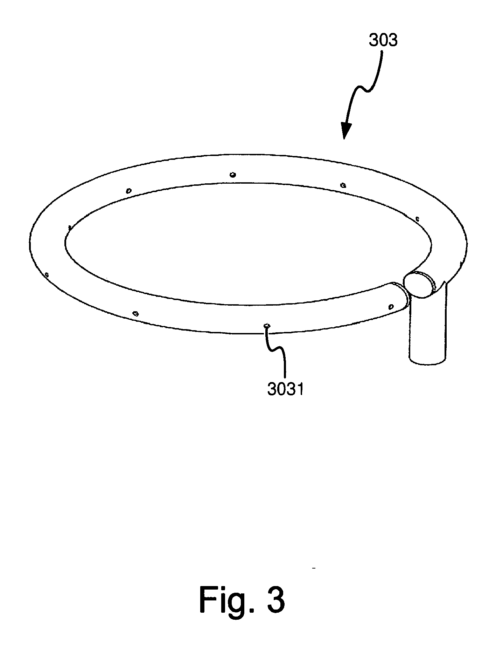

The distributing ring 303, as shown in FIG.3, surrounds the combustion chamber 100 at outside and is located above the pre-heater 302. The distributing ring 303 has a plurality of fuel distributing holes 3031 to uniformly spray the pre-heated fuel by the fuel distributing holes 3031. Thus, the fuel is uniformly sprayed to enter the spreading plate 304 for reformation in the fuel reformer 305.

The spreading plate 304 surrounds the combustion chamber 100 at outside and is located on the distributing ring 303. The spreading plate 304 has a plurality of spreading holes 3041 to uniformly spread the sprayed fuel by the spreading holes 3041, where the distributing ring 303 and the spreading plate 304 are combined to form a distribution spreading area.

The fuel reformer 305 surrounds the combustion chamber 100 and is located on the spreading plate 304 to be loaded on the loading plate 305 for reformation to generate hydrogen-rich gas.

Each of the outlets of burner reformer 306 is located on the fuel reformer 305 to output a reformed hydrogen-rich gas.

The reformate gas outlet 307 is located on the outlets of burner reformer 306 to guide the hydrogen-rich gas to a cell stack to generate electric energy through electrochemical reaction.

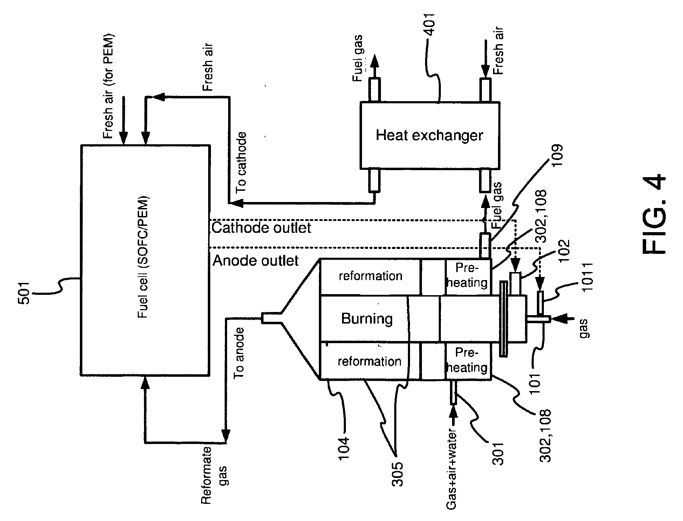

On using the present invention for generating hydrogen, gas entered from the spraying device 103 and air entered from the oxidant inlet 102 are mixed in the porous media burner 104 for burning through activating the burner reformer 306 by the igniter 201. The high-temperature tail-gas obtained after combustion enters into the tail-gas deflector 106 through the first tail-gas outlet 105 for reformation with a catalyst in the fuel reformer 305. Then, through the guiding channel 107, the high-temperature tail-gas penetrates through the spreading plate 304 and the distributing ring 303 of the distribution spreading area. Then, the high-temperature tail-gas enters the guiding blade 108 to provide heat to pre-heat fuel. At last, the high-temperature tail-gas is output to a heat exchanger 401 through the second tail-gas outlet 109 (as shown in FIG.4) to absorb extra heat for fully using the heat in combustion. For reformation, the fuel flows into the pre-heater 302 from the fuel inlet 301 to absorb heat from the high-temperature tail-gas for pre-heating. Then, the fuel enters into the distributing ring 303 to be sprayed by the distributing ring 303. Then, after being uniformly spread through the spreading plate 304, the fuel enters into the fuel reformer 305 for reformation to generate hydrogen-rich gas. At last, the reformate gas enters into the cell stack 501 from the reformate gas outlet 307 for generating electric energy through electrochemical reaction. Un-reacted residual hydrogen-rich gas is guided to the anode residual fuel outlet 1011 to enter the burner reformer 100 for combustion through the spraying device 103. At the same time, the gas entered from the gas inlet 101 can be reduced to none gradually until the whole system is stably run without inletting any gas.

As shown in FIG.4, the hydrogen-rich gas thus generated is directly provided for electrochemical reaction in solid oxide fuel cell (SOFC) to generate electric energy; or, for electrochemical reaction with proton exchange membrane, (PEM) to generate electric energy coordinated with removing carbon monoxide and cooling down temperature. Then, the residual fuel obtained after the electrochemical reaction is guided to the spraying device 103 of the burner reformer 100 for recycling to improve system efficiency and reduce environmental contamination. Thus, the present invention has a simple structure and is easily operated with improved efficiency, reduced contamination and lowered cost. Furthermore, the temperature distribution in area of the combustion is very uniform for high practicality, whose gradient is within 30 Celsius degrees (°C).

Concerning characteristics of the present invention, a burner is contained inside of a reformer; heat of a high-temperature generated after combustion in the burner is absorbed; and, conductive and radiating heat of the burner is absorbed. Thus, surface temperature is reduced and no pipes are required for connecting the reformer and the burner. Heat loss is reduced and operational temperature of the burner is lowered as well to diminish operational risk. The burner used in the present invention is a non-premixed porous media burner, which not only avoids flashing back of hydrogen but also helps system run stably to keep from flaming out even when fuel is lean.

To sum up, the present invention is a burner reformer for a fuel cell power generating system, where the present invention has a simple structure and is easily operated with improved efficiency, reduced contamination and lowered cost.

## Claims

1. A burner reformer for a fuel cell power generating systems, comprising
a gas inlet (101), said gas inlet (101) guiding a gas to enter;
a residual fuel inlet (1011), said residual fuel inlet (1011) being connected with said gas inlet (101), said residual fuel inlet (1011) guiding an unreacted residual hydrogen-rich gas to enter to obtain a fuel, said fuel being obtained by mixing said unreacted residual hydrogen-rich gas and said gas from said gas inlet (101);
an oxidant inlet (102), said oxidant inlet (102) guiding an oxidant to enter to burn gas;
a spraying device (103), said spraying device (103) being positioned in a combustion chamber, said spraying device (103) being connected with said gas inlet (101) and said residual fuel inlet (1011), said spraying device (103) comprising
a fuel tube (1031);
a plurality of branch tubes (1032); and
a spraying hole (1033) located on each one of said branch tubes (1032),
wherein said spraying device (103) guides said fuel to enter from said fuel tube (1031) to be directly sprayed by said spraying hole (1033) located on each one of said branch tubes (1032);
a porous media burner (104), said porous media burner (104) being positioned on said spraying device (103) in said combustion chamber to combust said fuel sprayed by said spraying device (103) and said oxidant obtained from said oxidant inlet (102);
a fuel inlet (301), said fuel inlet (301) guiding a to-be-reformed fuel to enter;
a pre-heater (302), said pre-heater (302) surrounding said combustion chamber at outside to absorb heat of a high-temperature tail-gas to pre-heat fuel;
a distributing ring (303), said distributing ring (303) surrounding said combustion chamber at outside, said distributing ring (303) being located on said pre-heater (302), said distributing ring (303) having a plurality of fuel distributing holes (3031) to uniformly spray said pre-heated fuel by said fuel distributing holes (3031);
a spreading plate (304), said spreading plate (304) surrounding said combustion chamber at outside, said spreading plate (304) being located on said distributing ring (303), said spreading plate (304) having a plurality of spreading holes (3041) to uniformly spread said sprayed fuel by said spreading holes (3041);
a plurality of fuel reformers (305), said fuel reformer (305) surrounding said combustion chamber, said fuel reformer (305) being located on said spreading plate (304), said fuel reformer (305) being loaded on said loading plate (3051) to process reformation to obtain hydrogen-rich gas;
an igniter (201), said igniter (201) being located on said porous media burner (104) to obtain energy to activate said burner reformer to process burning in said porous media burner (104);
a first tail-gas outlet (105), said first tail-gas outlet (105) being connected at a terminal of said combustion chamber to output a high-temperature tail-gas obtained after combustion;
a plurality of tail-gas deflectors (106), said tail-gas deflectors (106) surrounding said first tail-gas outlet (105) and said combustion chamber at outside to guide said high-temperature tail-gas entered from said first tail-gas outlet (105) to provide heat to process reformation with a catalyst in said fuel reformer (305);
a guiding channel (107), said guiding channel (107) penetrating through said loading plate (3051) to pass said high-temperature tail-gas from said loading plate (3051) to said spreading plate (304) without contacting said distributing ring (303);
a guiding blade (108), said guiding blade (108) surrounding said combustion chamber, said guiding blade (108) being located on an end surface of said distributing ring (303), said guiding blade (108) being an area to process pre-heating to said high-temperature tail-gas entered from said guiding channel (107);
a second tail-gas outlet (109), said second tail-gas outlet (109) outputting said high-temperature tail-gas to be collected;
a plurality of outlets of burner reformer (306), said outlets of burner reformer (306) being located on said fuel reformer (305) to output reformed hydrogen-rich gas; and
an reformate gas outlet (307), said reformate gas outlet (307) being located on said outlets of burner reformer (306) to guide said hydrogen-rich gas to a cell stack (501).

2. The burner reformer according to claim 1,
wherein said distributing ring (303) and said spreading plate (304) are combined to obtain a distribution spreading area.

3. The burner reformer according to claim 1,
wherein said second tail-gas outlet (109) is connected with a heat exchanger to collect said high-temperature tail-gas.

## Patentansprüche

1. Brennerreformierer eines Brennstoffzellenenergieerzeugungssystems, umfassend
einen Gaseinlass (101), wobei durch den Gaseinlass (101) ein Gas zugeführt wird,
einen Restbrennstoffeinlass (1011), wobei der Restbrennstoffeinlass (1011) mit dem Gaseinlass (101) verbunden ist, wobei durch den Restbrennstoffeinlass (1011) ein nicht umgesetztes, wasserstoffreiches Restgas eingeführt wird, um einen Brennstoff zu erhalten, wobei der Brennstoff durch die Mischung des nicht umgesetzten, wasserstoffreichen Restgases und dem Gas aus dem Gaseinlass (101) erzeugt wird,
einen Oxidationsmitteleinlass (102), wobei durch den Oxidationsmitteleinlass (102) ein Oxidationsmittel zur Verbrennung eines Gases zugeführt wird,
eine Sprühvorrichtung (103), wobei die Sprühvorrichtung (103) in einer Brennkammer angeordnet ist, wobei die Sprühvorrichtung (103) mit dem Gaseinlass (101) und dem Restbrennstoffeinlass (1011) verbunden ist, wobei die Sprühvorrichtung (103)
ein Brennstoffrohr (1031),
eine Mehrzahl an Zweigrohren (1032) und
eine Sprühöffnung (1033) an jedem der Zweigrohre (1032) beinhaltet,
wobei die Sprühvorrichtung (103) den Brennstoff leitet, aus dem Brennstoffrohr (1031) einzufließen, um direkt durch die Sprühöffnung (1033) an jedem der Zweigrohre (1032) versprüht zu werden,
einen Brenner mit einem porösen Medium (104), wobei der Brenner mit dem porösen Medium (104) an der Sprühvorrichtung (103) in der Brennkammer angeordnet ist, um den Brennstoff, der durch die Sprühvorrichtung (103) eingesprüht wird, und das Oxidationsmittel, welches durch den Oxidationsmitteleinlass (102) eingeleitet wird, zu verbrennen,
einen Brennstoffeinlass (301), wobei der Brennstoffeinlass (301) einen zu reformierender Brennstoff leitet, einzufließen,
einen Vorheizer (302), wobei der Vorheizer (302) die Brennkammer an einer Außenseite umgibt, um die Wärme eines Hochtemperatur - Endgases zum Vorheizen von Brennstoff zu verwenden,
einen Verteilerring (303), wobei der Verteilerring (303) die Brennkammer an einer Außenseite umgibt, wobei der Verteilerring (303) an dem Vorheizer (302) angeordnet ist, wobei der Verteilerring (303) eine Vielzahl an Brennstoffverteileröffnungen (3031) aufweist, um den vorgeheizten Brennstoff mittels der Brennstoffverteileröffnungen (3031) gleichmäßig zu versprühen,
eine Streuplatte (304), wobei die Streuplatte (304) die Brennkammer außen umgibt, wobei die Streuplatte (304) an dem Verteilerring (303) angeordnet ist, wobei die Streuplatte (304) eine Vielzahl an Streuöffnungen (3041) aufweist, um den gesprühten Brennstoff durch die Streuöffnungen (3041) gleichmäßig zu verteilen,
eine Vielzahl an Brennstoffreformierern (305), wobei die Brennstoffreformierer (305) die Brennkammer umgeben, wobei die Brennstoffreformierer (305) an der Streuplatte (304) angeordnet sind, wobei die Brennstoffreformierer (305) an der Ladeplatte (3051) beschickt werden, um einen Reformierungsprozess durchzuführen, sodass wasserstoffreiches Gas erhalten wird,
eine Zündvorrichtung (201), wobei die Zündvorrichtung (201) an dem Brenner mit dem porösen Medium (104) angeordnet ist, um Energie zu erhalten, um die Brennerreformierer zu aktivieren, sodass ein Verbrennungsprozess in dem Brenner mit dem porösen Medium (104) erfolgen kann,
einen ersten Endgasauslass (105), wobei der erste Endgasauslass (105) mit einem Endstück der Brennkammer verbunden ist, um ein Hochtemperatur - Endgas, das nach der Verbrennung erhalten wird, auszugeben,
eine Vielzahl an Endgasumlenkblechen (106), wobei die Endgasumlenkbleche (106) den ersten Endgasauslass (105) und die Brennkammer außen umgeben, um das besagte Hochtemperatur - Endgas, das durch den ersten Endgasauslass (105) austritt, umzulenken, sodass Wärme für den Reformierungsvorgang mit einem Katalysator in den Brennstoffreformierern (305) zurückgewonnen werden kann,
einen Führungskanal (107), wobei der Führungskanal (107) durch die Ladeplatte (3051) verläuft, sodass das Hochtemperatur - Endgas von der Ladeplatte (3051) zu der Streuplatte (304) strömen kann, ohne mit dem Verteilerring (303) in Kontakt zu kommen,
eine Führungsschaufel (108), wobei die Führungsschaufel (108) die Brennkammer umgibt, wobei die Führungsschaufel (108) an einer Endfläche des Verteilerrings (303) angeordnet ist, wobei die Führungsschaufel (108) einen Bereich ausbildet, in welchem ein Vorheizen mit dem Hochtemperatur - Endgas erfolgt, welches durch den Führungskanal (107) zugeführt wird,
einen zweiten Endgasauslass (109), wobei durch den zweiten Endgasauslass (109) das Hochtemperatur - Endgas abgegeben wird, welches gesammelt werden soll,
eine Vielzahl an Auslassöffnungen des Brennerreformierers (306), wobei die Auslassöffnungen des Brennerreformieres (306) an dem Brennstoffreformierer (305) vorgesehen sind, um ein reformiertes wasserstoffreiches Gas abzugeben, und
einen Reformatgasauslass (307), wobei der Reformatgasauslass (307) an den Auslassöffnungen des Brennerreformierers (306) angeordnet ist, um das wasserstoffreiche Gas zu einem Zellenstapel (501) zu leiten.

2. Brennerreformierer nach Anspruch 1,
wobei der Verteilerring (303) und die Streuplatte (304) in einer Weise zusammenwirken, dass ein Verteilungsverbreiterungsabschnitt erhalten wird.

3. Brennerreformierer nach Anspruch 1,
wobei der zweite Endgasauslass (109) mit einem Wärmetauscher verbunden ist, um das Hochtemperatur - Endgas zu sammeln.

## Revendications

1. Reformeur de brûleur pour un système générant de l'énergie pour une pile à combustible comprenant :
une entrée de gaz (101), ladite entrée de gaz (101) guidant l'entrée d'un gaz ;
une entrée de combustible résiduel (1011), ladite entrée de combustible résiduel (1011) étant reliée à ladite entrée de gaz (101), ladite entrée de combustible résiduel (1011) guidant un gaz résiduel riche en hydrogène et n'ayant pas réagi pour entrer pour obtenir un combustible, ledit combustible étant obtenu en mélangeant ledit gaz résiduel riche en hydrogène et n'ayant pas réagi et ledit gaz de ladite entrée de gaz (101) ;
une entrée pour oxydant (102), ladite entrée pour oxydant (102) guidant un oxydant pour entrer pour brûler du gaz ;
un dispositif de pulvérisation (103), ledit dispositif de pulvérisation (103) étant positionné dans une chambre de combustion, ledit dispositif de pulvérisation (103) étant relié à ladite entrée de gaz (101) et à ladite entrée de combustible résiduel (1011), ledit dispositif de pulvérisation (103) comprenant :
un tube de combustible (1031) ;
une pluralité de tubes de branchement (1032) et
un trou de pulvérisation (1033) situé sur chacun desdits tubes de branchement (1032),
ledit dispositif de pulvérisation (103) guidant ledit combustible pour entrer dudit tube de combustible (1031) pour être directement pulvérisé par ledit trou de pulvérisation (1033) situé sur chacun desdits tubes de branchement (1032)" un brûleur de milieux poreux (104), ledit brûleur de milieux poreux (104) étant positionné sur ledit dispositif de pulvérisation (103) dans ladite chambre de combustion pour faire la combustion dudit combustible pulvérisé par ledit dispositif de pulvérisation (103) et ledit oxydant obtenu par ladite entrée pour oxydant (102) ;
une entrée de combustible (301), ladite entrée de combustible (301) guidant le combustible à reformer pour entrer ;
un préchauffeur (302), ledit préchauffeur (302) entourant ladite chambre de combustion sur le côté extérieur pour absorber la chaleur du gaz de queue à haute température pour préchauffer le combustible ;
un anneau de distribution (303), ledit anneau de distribution (303) entourant ladite chambre de combustion sur le côté extérieur, ledit anneau de distribution (303) étant situé sur ledit préchauffeur (302), ledit anneau de distribution (303) ayant une pluralité de trous de distribution de combustible (3031) pour pulvériser uniformément ledit combustible préchauffé par lesdits trous de distribution de combustible (3031) ;
une plaque de diffusion (304), ladite plaque de diffusion (304) entourant ladite chambre de combustion sur le côté extérieur, ladite plaque de diffusion (304) étant située sur ledit anneau de distribution (303), ladite plaque de diffusion (304) ayant une pluralité de trous de diffusion (3041) pour diffuser uniformément ledit combustible pulvérisé par lesdits trous de diffusion (3041) ;
une pluralité de reformeurs de combustible (305), ledit reformeur de combustible (305) entourant ladite chambre de combustion, ledit reformeur de combustible (305) étant situé sur ladite plaque de diffusion (304), ledit reformeur de combustible (305) étant chargé sur ladite plaque de chargement (3051) pour effectuer le reformation pour obtenir un gaz riche en hydrogène ;
un allumeur (201), ledit allumeur (201) étant situé sur ledit brûleur de milieux poreux (104) pour obtenir de l'énergie pour activer ledit reformeur de brûleur pour effectuer le brûlage dans ledit brûleur de milieux poreux (104) ;
une première sortie de gaz de queue (105), ladite première sortie de gaz de queue (105) étant reliée à une borne de ladite chambre de combustion pour sortir un gaz de queue à haute température obtenu après combustion ;
une pluralité de déflecteurs de gaz de queue (106), lesdits déflecteurs de gaz de queue (106) entourant ladite première sortie de gaz de queue (105) et ladite chambre de combustion sur le côté extérieur pour guider ledit gaz de queue à haute température entré par ladite première sortie de gaz de queue (105) pour fournir de la chaleur pour effectuer la reformation avec un catalyseur dans ledit reformeur de combustible (305) ;
un canal de guidage (107), ledit canal de guidage (107) pénétrant à travers ladite plaque de chargement (3051) pou faire passer ledit gaz de queue à haute température de ladite plaque de chargement (3051) à ladite plaque de diffusion (304) sans avoir contact avec ledit anneau de distribution (303) ;
une lame de guidage (108), ladite lame de guidage (108) entourant ladite chambre de combustion, ladite lame de guidage (108) étant située sur une surface d'extrémité dudit anneau de distribution (303), ladite lame de guidage (108) étant une zone pour effectuer le préchauffage du gaz de queue à haute température entré par ledit canal de guidage (107) ;
une seconde sortie de gaz de queue (109), ladite seconde sortie de gaz de queue (109) faisant sortir ledit gaz de queue à haute température à recueillir ;
une pluralité de sorties de reformeur de brûleur (306), lesdites sorties du reformeur de brûleur (306) étant situés sur ledit reformeur de combustible (305) pour faire sortir le gaz de reformage riche en hydrogène et
une sortie de gaz de reformage (307), ladite sortie de gaz de reformage (307) étant situé sur lesdites sorties du reformeur de brûleur (306) pour guider ledit gaz de reformage riche en hydrogène à une pile à combustible (501).

2. Reformeur de brûleur selon la revendication 1, ledit anneau de distribution (303) et ladite plaque de diffusion (304) étant combinés pour obtenir une zone de diffusion de distribution.

3. Reformeur de brûleur selon la revendication 1, la seconde sortie de gaz de queue (109) étant reliée à un échangeur thermique pour recueillir ledit gaz de queue à haute température.
